Europäisches Patentamt

European Patent Office

Office européen des brevets

(19)

(11) EP 0 735 793 A1

(12) DEMANDE DE BREVET EUROPEEN

(43) Date de publication:
02.10.1996 Bulletin 1996/40

(51) Int. Cl.⁶: H04Q 11/04, H04J 3/24

(21) Numéro de dépôt: 96200792.8

(22) Date de dépôt: 22.03.1996

(84) Etats contractants désignés:
DE FR GB SE

(30) Priorité: 29.03.1995 FR 9503693

(71) Demandeurs:
• PHILIPS COMMUNICATION D'ENTREPRISE
75013 Paris (FR)
Etats contractants désignés:
FR

• Philips Electronics N.V.
5621 BA  Eindhoven (NL)
Etats contractants désignés:
DE GB SE

(72) Inventeur: Gauthier, Jean-Pierre
75008 Paris (FR)

(74) Mandataire: Chaffraix, Jean
Société Civile S.P.I.D.
156, Boulevard Haussmann
75008 Paris (FR)

(54) Système de communication comportant un réseau et dispositif de multiplexage convenant à un tel système

(57) Ce système de communication impliquant un réseau A.T.M., comporte un dispositif de multiplexage (160) constitué par :

- une pluralité de bornes d'accès (180...) pour des utilisateurs ayant des cellules à transmettre avec un certain débit, au moins une borne de raccord (170...),
- un circuit d'affectation (300) pour déterminer à une date courante la fourniture, à la borne de raccord, d'une cellule dite cellule élue, circuit comprenant :

  • un circuit pour fournir un premier identificateur de destination (VP),
  • un circuit de détermination de dates théoriques pour déterminer une date théorique pour l'émission des cellules disponibles de chaque circuit de service en fonction du débit,
  • un circuit d'arborescence présentant :

    . des "feuilles" pour recevoir les dates théoriques pour chaque circuit de service,
    . une racine pour contenir des dates dites dates racine à partir desquelles est établie une date dite date prioritaire, parmi les dates théoriques,
    . des noeuds reliant lesdites feuilles à ladite racine,

  • un circuit de sous-arborescence pour sélectionner des feuilles parmi les feuilles du circuit d'arborescence en fonction du premier identificateur de destination et pour créer une partition à l'intérieur de celui-ci,

  • un circuit de détermination de date racine pour déterminer dans ladite partition, au moins une date racine,
  • un circuit d'extraction pour déterminer la cellule élue à partir des dates racines.

Application : réseaux A.T.M.

FIG.3

## Description

La présente invention concerne un système de communication formé d'au moins un réseau du genre A.T.M., notamment, qui transmet d'un de ses points d'accès à un autre des cellules d'informations comportant un premier identificateur de destination définissant un ensemble de destinations et un deuxième identificateur de destination définissant un sous-ensemble dudit ensemble et d'au moins un dispositif de multiplexage constitué par :

- une pluralité de bornes d'accès pour des utilisateurs ayant des cellules à transmettre, avec un certain débit, vers une certaine destination définie par lesdits identificateurs de destination,
- au moins une borne de raccord pour au moins un point d'accès dudit réseau,
- une pluralité de circuits de service reliés aux bornes d'accès, munis d'organes de files d'attente pour emmagasiner chacun les cellules d'utilisateur ayant les mêmes identificateurs de destination et pour rendre disponibles, sur des sorties de cellules, les cellules emmagasinées,
- un circuit d'affectation pour déterminer à une date courante la fourniture, à ladite borne de raccord par l'intermédiaire d'un circuit de sortie, d'une cellule, dite cellule élue, choisie parmi les cellules disponibles, circuit comprenant :

    • un circuit pour fournir un premier identificateur de destination.

La présente invention concerne aussi un dispositif de multiplexage convenant à un tel système.

La technique A.T.M (Asynchronous Transfer Mode) permet la transmission sur un même support de données de natures différentes (son, image, fichiers etc..). Ces données sont rangées dans des paquets appelés cellules d'une longueur normalisée de 53 octets. Une adresse contenue dans l'entête et composée de deux champs, le VPI (Virtual Path Identifier) et le VCI (Virtual Channel Identifier) assure le routage des cellules au sein du réseau A.T.M. Le contenu utile de la trame de transmission s'appelle le conduit ATM. Une succession de cellules ATM possédant le même VPI constitue un conduit virtuel VP. Le chemin suivi par une succession de cellules ATM pour le même VPI et le même VCI constitue un circuit virtuel VC.

Pour accéder au réseau A.T.M on est confronté à certaines contraintes de débit et de gigue tant au niveau du conduit virtuel VP que du conduit virtuel VC, imposées pour des raisons de tarification et de sécurité. Un système de police, rattaché aux accès du réseau, effectue des contrôles et peut même supprimer les cellules qui provoquent un sur-débit.

Le point d'accès au réseau est assuré par un dispositif de multiplexage qui doit, par conséquent, comporter des moyens pour agencer les cellules dans le conduit A.T.M de manière à ce qu'elles soient en conformité avec cette police et aussi à amener le moins de gigue possible.

Le document de brevet français déposé au nom de la demanderesse le 22 juin 1994 sous le n° 94 07664 (FR 2 721 777), décrit un mécanisme convenant particulièrement à la régulation de cellules "paramétrée" sur un débit maximum PCR (Peak Cell Rate) et un facteur $\tau < 1$ (gigue inférieure à une période). Comme, d'une part, il a été défini en Septembre 1993 dans le document "A.T.M. User-Network Interface Specification Version 3.0" de l'ATM Forum, la notion de débit moyen SCR (Sustainable Cell Rate) et comme, d'autre part, il devient nécessaire de traiter aujourd'hui le multiplexage statistique entre flux de cellules, il faut donc modifier les mécanismes connus pour tenir compte de ces nouvelles exigences.

La présente invention propose un système du genre décrit ci-dessus qui tient compte de ces nouvelles exigences et qui permet de réguler l'émission des cellules tant au niveau du conduit VP qu'au niveau du conduit VC. Il va de soi que l'invention s'applique à d'autres réseaux que les réseaux A.T.M.

Pour cela, un tel système est remarquable en ce que le circuit d'affectation comporte, en outre :

• un circuit de détermination de dates théoriques pour déterminer une date théorique pour l'émission des cellules disponibles de chaque circuit de service en fonction notamment du certain débit,
• un circuit d'arborescence présentant :

    . des "feuilles" pour recevoir les dates théoriques pour chaque circuit de service,
    . une racine pour contenir des dates dites dates racine à partir desquelles est établie une date dite date prioritaire, parmi les dates théoriques,
    . des noeuds établis en couches qui relient lesdites feuilles à ladite racine,

• un circuit de sous-arborescence pour sélectionner des feuilles parmi les feuilles du circuit d'arborescence en fonction du premier identificateur de destination et pour créer une partition à l'intérieur de celui-ci,
• un circuit de détermination de date racine pour déterminer dans ladite partition, au moins une date racine.

La description suivante faite en regard des dessins ci-annexés, le tout donné à titre d'exemple non limitatif, fera bien comprendre comment l'invention peut être réalisée.

La figure 1 montre un réseau sur lequel est connecté un dispositif de multiplexage conforme à l'invention.

La figure 2 montre la structure des cellules d'information transmises par le réseau.

La figure 3 montre un dispositif de multiplexage conforme à l'invention.

La figure 4 montre la structure d'un circuit d'affectation faisant partie du dispositif de la figure 3.

La figure 5 montre la structure de l'arborescence gérée par le circuit d'arborescence faisant partie du système de l'invention.

La figure 6 montre la structure du circuit d'arborescence.

La figure 7 montre plus en détail la structure du circuit d'arborescence.

La figure 8 montre un premier mode de fonctionnement du circuit d'aborescence.

La figure 9 montre un deuxième mode de fonctionnement du circuit d'aborescence.

La figure 10 montre un troisième mode de fonctionnement du circuit d'aborescence.

La figure 11 montre les relations fonctionnelles établies par le circuit de calcul.

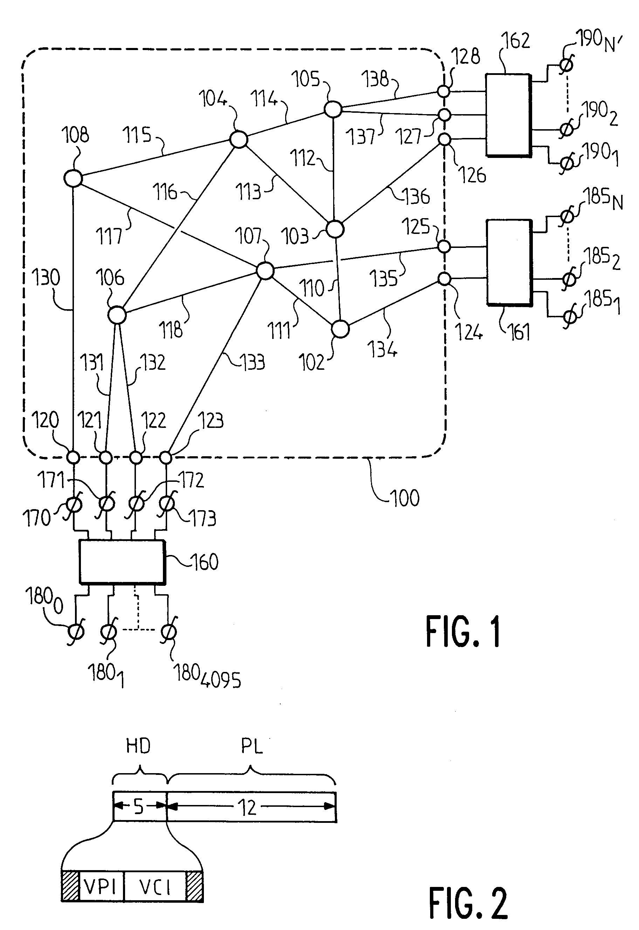

La figure 1 montre d'une manière schématisée un réseau A.T.M. portant sur la figure la référence 100. On trouvera une description de ce réseau dans l'ouvrage : " ASYNCHRONOUS TRANSFER MODE " de MARTIN de PRYCKER paru en 1991 aux éditions ELLIS HORWOOD en Angleterre. Ce réseau est constitué de différents noeuds 102, 103, 104, 105, 106, 107 et 108 reliés entre eux par des liaisons 110 à 118 pour relier respectivement les noeuds 102-103, 102-107, 103-105, 103-104, 104-105, 104-108, 104-106, 107-108 et 106-107. On a repéré par 120 à 128 différents points d'accès de ce réseau. Ces points d'accès sont respectivement reliés aux noeuds 108, 106, 107, 102, 103 et 105 par l'intermédiaire de liaisons 130 à 138 respectivement. A ces points d'accès, se connectent différents dispositifs de multiplexage et de démultiplexage 160, 161 et 162. Parmi ces dispositifs, il faut distinguer : un dispositif de multiplexage 160, faisant partie de la présente invention, et deux dispositifs de démultiplexage 161 et 162 qui effectuent les opérations inverses de celles du dispositif 160 et qui font partie du système de l'invention. On trouvera dans le document de brevet n° EP 0 632 669 déposé le 23 juin 1994 une description de tels dispositifs de démultiplexage. Pour être relié aux quatre points 120, 121, 122 et 123, le dispositif de multiplexage 160 est muni de quatre bornes de raccord 170, 171, 172 et 173. Ainsi les informations peuvent, dans le cadre de cet exemple décrit, aller du dispositif 160 vers les dispositifs 162 et 164 en transitant par le réseau 100. Ces informations à transmettre sont appliquées à une pluralité de bornes d'accès $180_0$ à $180_{4095}$ dont est pourvu le dispositif de multiplexage 160, et peuvent être fournies, entre autres, à des bornes de sortie $185_1$ à $185_N$ du dispositif 161 et $190_1$ à $190_N$, du dispositif 162. L'ordre de grandeur de N et N' est du millier. Les informations transmises dans le réseau se présentent sous forme de cellules dont l'allure est montrée à la figure 2. Ces cellules sont formées de 53 octets : 5 constituent l'entête HD et les 48 autres référencés par PL contiennent les données pour un service à transmettre. Dans l'entête, on distingue deux codes VPI et VCI correspondant respectivement à des identificateurs de chemin virtuel et de circuit virtuel. Les identificateurs de chemin sont plutôt traités par l'opérateur de transmission et l'identificateur de circuit virtuel par l'utilisateur. A chaque VP, on associe des sous-ensembles de VC : un sous-ensemble CBR et un sous-ensemble VBR lui-même constitué de deux sous-ensembles PCR et SCR. Un canal de données peut être du type CBR (Constant Bit Rate) auquel cas son débit est normalement régulé par la source. On optimise alors seulement la gigue sans contrôle de débit et l'on exécute un arbitrage entre VC de type CBR du même VP pour minimiser la gigue.

Un VC peut être du type VBR (Variable Bit Rate) considéré comme moins prioritaire par rapport au VC de type CBR. Il est normalement caractérisé par son débit "moyen" SCR (Sustainable Cell Rate) et son débit "en pointe" PCR (Peak Cell Rate). Le débit PCR est supérieur au débit SCR et ne peut être présent que pendant une durée spécifiée (rafale de cellules). L'ATM forum précité définit précisément le type VBR vu de la police. Le type ABR (Available Bit Rate) en cours de définition par l'ATM Forum pourra aisément être adapté au présent dispositif. Un processus doté d'un algorithme EPRCA (Enhanced Proportional Rate Control Algorithm) non décrit ici modifiera alors dynamiquement les paramètres de débits liés aux chemins ou circuits virtuels.

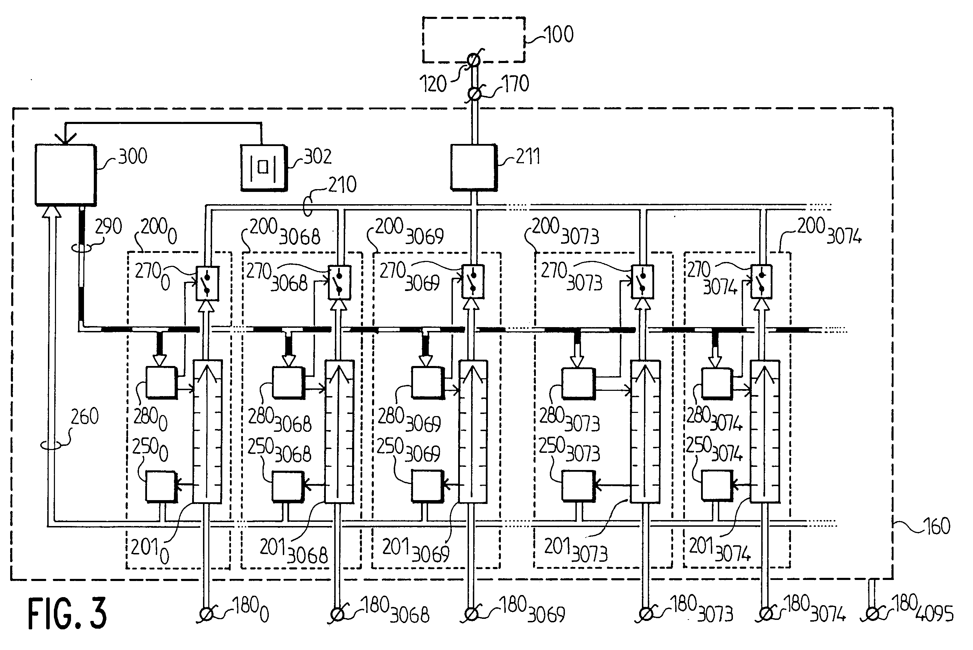

La figure 3 montre un schéma du dispositif de multiplexage 160. Sur cette figure, on s'intéresse seulement, pour simplifier l'exposé, aux cellules à fournir à la seule borne 170 à partir des bornes d'accès $180_0$ à $180_{4095}$. Le classement par priorité est déjà codé dans les algorithmes au travers des indirections PT_SCR et PT_SCR du descripteur de VC décrit Tableau I.

Chacune de ces bornes $180_0$ à $180_{4095}$ recoit des cellules ayant les mêmes identificateurs et les mêmes contraintes de trafic. L'indice i ($0 \leq i \leq 4095$) détermine l'indice des accès $180_0$ à $180_{4095}$. Les cellules sont emmagasinées respectivement dans des organes de file d'attente $200_0$ à $200_{4095}$. Ces différents organes $200_0$ à $200_{4095}$ sont constitués à partir d'une mémoire de type FIFO $201_0$ à $201_{4095}$ respectivement. Ces mémoires restituent à leur sortie les données dans l'ordre où elles ont été entrées. Un code de reconnaissance "i" est affecté à chacun de ces organes $200_0$ à $200_{4095}$. Une ligne commune de données 210 connecte la sortie des organes de file d'attente à la borne 170, via un circuit de sortie 211 qui est un simple circuit pour l'adaptation des signaux sur la borne 120. Chaque organe de file

3

d'attente $200_0$ à $200_{4095}$ est muni d'un circuit de notification $250_0$ à $250_{4095}$ respectivement pour notifier la présence d'une cellule à son entrée. Ce circuit envoie cette notification accompagnée du code de reconnaissance sur une ligue commune 260. Les organes de file d'attente $200_0$ à $200_{4095}$ sont aussi pourvus d'organes d'autorisation d'émettre que l'on a fait figurer respectivement sous forme d'un interrupteur $270_0$ à $270_{4095}$, d'une part, et d'un organe décodeur $280_0$ à $280_{4095}$, d'autre part. L'entrée de cet organe décodeur est reliée à une troisième ligne commune 290 qui interconnecte tous les organes de file d'attente $200_0$ à $200_{4095}$.

Un circuit d'affectation 300 en traitant les notifications transmises sur la ligne 260, fournit sur cette dernière ligne 290 le code de reconnaissance pour autoriser l'organe de file d'attente, concerné par ce code, à émettre une cellule dite cellule élue. Ce circuit d'affectation 300 fonctionne au rythme d'une horloge 302 qui fournit aussi, d'une manière non montrée, d'autres signaux aux différents composants du circuit de multiplexage.

## DESCRIPTION DU CIRCUIT D'AFFECTATION. (300)

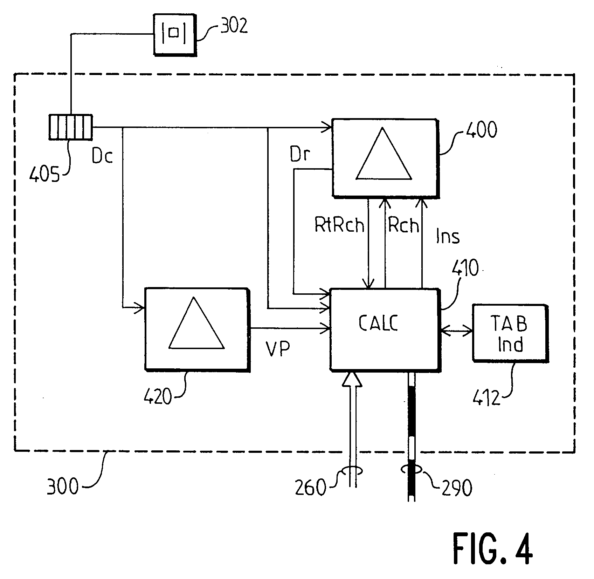

La figure 4 montre la structure du circuit d'affectation 300. Il comporte un circuit d'arborescence 400, un compteur de datation 405 qui donne la date courante "Dc" à partir des signaux de l'horloge 302. Il comporte aussi un organe de calcul 410 qui assure la gestion du circuit d'affectation 300 en coopération avec une mémoire de travail 412 contenant notamment des informations rattachées aux différents VP et VC. Un deuxième circuit 420 fournit le VP. Ce circuit 420 peut être avantageusement du type décrit dans le document de brevet précité, ou par une table d'affectation scrutée cycliquement, décrite dans le document de brevet européen n° 0 618 748. Le VC choisi par le circuit est fourni sur la ligne 290.

## Description de l'arborescence.

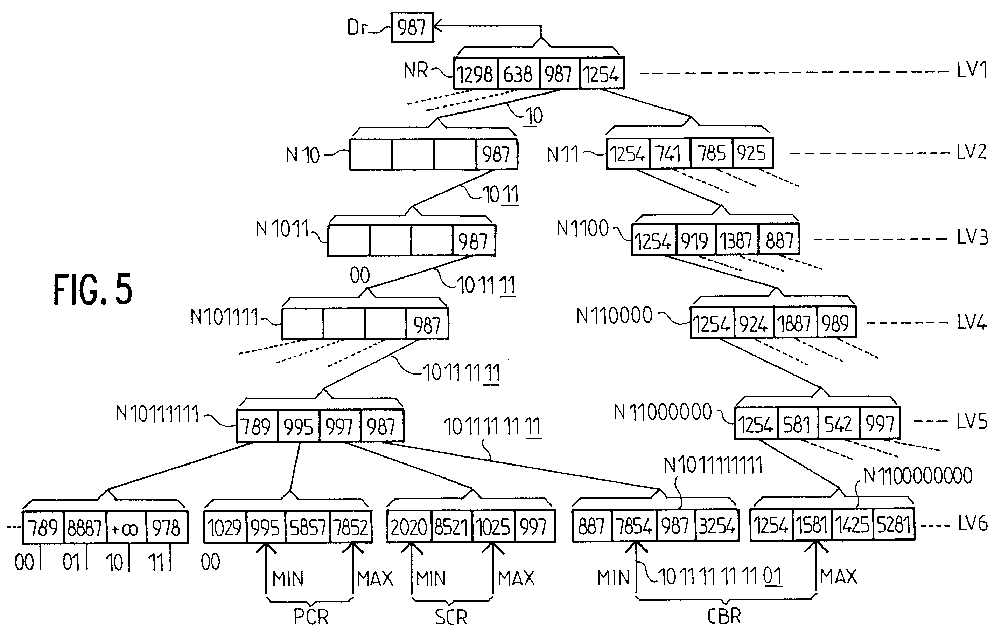

La figure 5 montre l'arborescence que le circuit d'arborescence 400 doit gérer.

Cette arborescence est de type quaternaire et formée de six niveaux LV1 à LV6 comportant 1 à 1024 noeuds. Chaque noeud est formé de quatre cases numérotées, de manière implicite, de la gauche vers la droite : "00", "01", "10" et"11". Chacune de ces cases est reliée à un noeud du niveau inférieur. Les cases du dernier niveau LV6 constituent les feuilles de l'arbre. Le niveau LV1 comporte un seul noeud dit noeud racine portant la référence NR. Le niveau LV2 comporte quatre noeuds dont les références sont formées de la lettre N suivie d'un numéro d'ordre noté en binaire soit : N00, N01, N10 et N11 ; seuls les noeuds N10 et N11 sont montrés sur la figure. Le niveau LV3 comporte 16 noeuds dont seuls les noeuds portant les références N1011 et N1100 sont montrés. On a ainsi pour les autres niveaux :

LV4 64 noeuds dont seuls les noeuds N101111 et N110000 sont montrés.
LV5 256 noeuds dont seuls les noeuds N10111111 et N11000000 sont montrés et
LV6 1024 noeuds dont seuls les noeuds N1011111111 et N1100000000 sont repérés.

On constate que la numérotation de chaque noeud est composée, d'une part, de la partie binaire du noeud du niveau supérieur auquel il est relié et, d'autre part, du numéro de la case à laquelle il est plus particulièrement rattaché.

Selon l'invention, l'arborescence est divisée en sous-arbres. Sur la figure 5, trois sous-arbres relatifs à un même VP sont montrés. Un de ces sous-arbre concerne des VC PCR, un autre des VC SCR et le dernier des VC CBR. Ces différents sous-arbres sont délimités par des paramètres MIN et MAX. En principe, chaque VC CBR possède une entrée dans le sous-arbre CBR de son VP tandis que les VC VBR en possèdent deux : une dans le sous-arbre SCR et l'autre dans le sous-arbre PCR. Afin d'obtenir une régulation optimale des débits sur les VC VBR d'un VP, il est nécessaire que les entrées d'un sous-arbre SCR ou PCR soient classées par priorité selon le débit de leur VC associé, du plus haut vers le plus bas débit, et donc de la gauche vers la droite du sous-arbre.

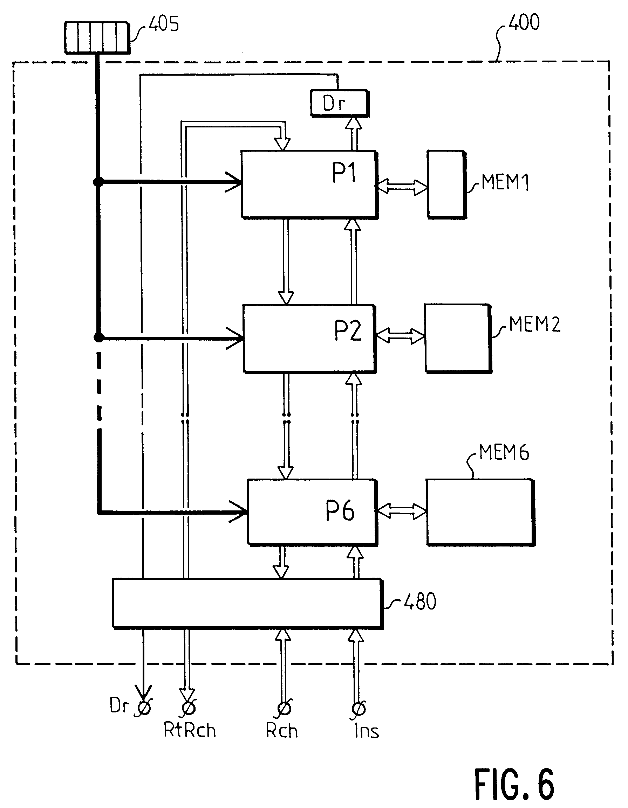

La figure 6 montre la structure du circuit d'arborescence 400. Ce circuit 400 comporte une succession de processeurs P1 à P6, affectés chacun à un niveau LV1 à LV6 respectivement. Au processeur P1 est rattachée une mémoire MEM1 formée d'une ligue comportant quatre dates provenant du processeur P2. A ce processeur P2 est rattachée une mémoire MEM2 formée de quatre lignes contenant chacune quatre dates provenant du processeur P3 et ainsi de suite jusqu'au processeur P6 auquel est rattachée une mémoire MEM6 organisée en 1024 lignes contenant chacune quatre dates relatives à quatre feuilles, de sorte que l'on peut traiter les différentes feuilles numérotées de 0 à 4095. Les feuilles sont destinées à recevoir des dates par insertion. Les dates à insérer dans les feuilles font partie des arguments d'une fonction "Ins".

Le circuit d'arborescence 400 fournit en réponse à une information relative à une fonction "Rch" un résultat "RtRch" représentant, par indirection au travers de la table "Ind" 412 (figure 4), le numéro de l'organe de file d'attente qui doit émettre sa cellule. Un circuit de répartition 480 permet d'appliquer les informations qui doivent aller dans le sens feuilles-racines et dans le sens racines-feuilles.

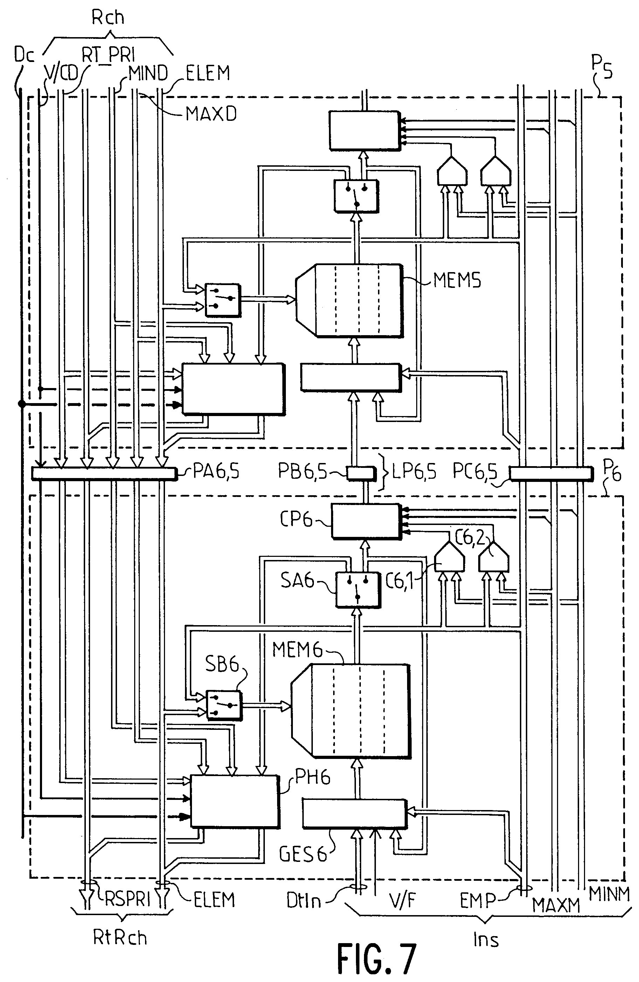

La figure 7 détaille la structure des processeurs P5 et P6. Leur mémoire associée porte respectivement les références MEM5 et MEM6.

**Traitement feuilles-racine.**

Ce traitement est relatif aux arguments de la fonction "Ins" soit dans l'ordre d'appel :

EMP : l'emplacement de la feuille susceptible de recevoir une nouvelle date.
DtIn : la date susceptible d'être insérée.
V/F : valide ou non cette insertion.
MINM puis
MAXM : fixent les limites du sous-arbre dans lequel on travaille dans le sens indiqué.

Les deux éléments binaires de poids faible de l'information EMP notés "$C_{EMP}$" sont appliqués à un circuit de gestion d'entrée GES6 pour définir la case du noeud du niveau LV6 tandis que le reste des éléments binaires notés "$N_{EMP}$" est appliqué à l'entrée pour adressage de la mémoire MEM6 via un commutateur d'adressage SB6 pour définir le numéro du noeud. Comme la mémoire MEM6 est organisée en lignes contenant chacune quatre codes, le circuit de gestion GES6 a pour rôle de mettre ce code au bon emplacement de ligne. Pour cela, dans un premier temps, il emmagasine les quatre codes mémorisés dans la ligne adressée, par l'intermédiaire du commutateur d'adressage SB6 à deux positions, par une autre partie du code provenant de la ligne EMP. Dans un deuxième temps, le circuit de gestion GES6 surcharge par le code venant de la ligne DtIn une des quatre dates mémorisées en fonction des deux éléments binaires précités. Dans un troisième temps, tous les codes emmagasinés dans ce circuit de gestion sont enregistrés dans la mémoire MEM6. Dans un quatrième temps, ces mêmes codes sont lus à nouveau de MEM6 et présentés à un organe de détermination de date CP6 qui détermine le code de date à transmettre sur une ligne LP6,5.

L'organe de détermination des dates CP6 remonte le code ayant la plus petite valeur en prenant en compte MINM et MAXM de la manière suivante.

Si on note $N_{min}$ la valeur du noeud contenue dans MINM pendante de $N_{EMP}$ et $C_{min}$ la valeur de ses deux éléments binaires de poids immédiatement inférieurs, CP6 ignore les codes à gauche du code défini par "$C_{min}$" si $N_{min} = N_{EMP}$ . De la même manière, si on note $N_{max}$ la valeur du noeud contenue dans MAXM pendante de $N_{EMP}$ et $C_{max}$ la valeur de ses deux éléments binaires de poids immédiatement inférieurs, CP6 ignore les codes à droite du code défini par "$C_{max}$" si toutefois $N_{max} = N_{EMP}$ . Les tests $N_{min} = N_{EMP}$ et $N_{max} = N_{EMP}$ sont effectués respectivement par C6,1 et C6,2. Un traitement analogue est exécuté par les autres processeurs P5 à P1. Un registre Dr contient finalement la date racine qui est la date rendue par P1 en sortie de CP1. On notera toutefois la présence d'un signal V/F appliqué au seul circuit de gestion GES6 qui, lorsqu'il a la valeur FAUX, permet d'annihiler l'écriture d'une nouvelle date dans la mémoire MEM6. Ainsi lorsqu'on considère le dernier processeur P1, celui-ci contient, dans sa mémoire MEM1, les dates théoriques ayant les valeurs issues des choix des processeurs précédents. Ceci constitue le traitement feuilles-racine.

La figure 5 représente l'arborescence après une insertion sur les feuilles notées en binaire "10 11 11 11 11 01" et "11 00 00 00 00 01" en prenant pour valeurs de MINM et MAXM ces mêmes valeurs. On constate que Dr contient la plus petite date contenue entre MIND et MAXD. Une insertion aux limites d'un sous-arbre constitue la première étape de partitionnement de l'arbre (appliquée ici au sous-arbre CBR).

**Traitement racine-feuilles**

Ce traitement est relatif aux arguments de la fonction "Rch" soit dans l'ordre d'appel :

V/CD : permet d'avoir deux critères différents pour choisir le circuit VC,
MIND puis
MAXD : fixent le sous-arbre dans lequel on travaille,
RT_PRI : donne une priorité pour les circuits VC afin d'éviter que ce soit toujours les mêmes qui soient choisis.

Les paramètres de sortie de cette fonction "Rch" sont :

ELEM : numéro de la feuille et de là, le circuit virtuel qui est choisi ; ce numéro se complète par concaténation à chaque changement de niveau.
RSPRI : donne un changement de priorité pour une nouvelle élection de VC. Cette valeur constitue l'argument RT_PRI pour une recherche suivante.

Le traitement racine-feuilles consiste à fournir, par indirection, l'adresse correspondante de la feuille associée à l'organe de file d'attente qui est autorisé à émettre sa cellule. Ce code est élaboré par concaténation d'une manière similaire à celle décrite dans le document de brevet précité et apparaît sur la ligne ELEM. Ce choix est aussi effectué en fonction de grandeurs MAXD et MIND qui limitent ce choix. En outre, une grandeur V/CD permet de changer de critère pour effectuer ce choix. On élabore aussi un autre code par concaténation qui apparaît sur une ligne RSPRI. Ceci permet de faire une priorité tournante comme cela sera décrit dans la suite du présent mémoire.

Ce traitement consiste tout d'abord à changer les positions des circuits d'aiguillage SA6 et SB6. La mémoire MEM6 est alors adressée par un code provenant de la ligne ELEM, un organe de recherche PH6 dont l'entrée est reliée à la sortie de données de la mémoire MEM6 par l'intermédiaire du circuit d'aiguillage SA6 va déterminer les deux derniers élément binaires du code final de ELEM et de RSPRI. Ceci est effectué, notamment, par comparaison des codes contenus dans la ligne adressée avec ceux fournis par l'organe de datation 405. Les circuits $PH_j$ avec j = 1 à 6 peuvent être conçus en fonction des explications qui suivent.

Le circuit Phj élit un code parmi ceux présents en sortie du circuit d'aiguillage SAj. Pour l'élection, un principe d'exclusion analogue à celui utilisé sur l'insertion, est appliqué aux codes présents.
Au niveau j, on pose :

- $N_{min,j}$ la valeur de MIND portant sur ses "2 * (j-1)" bits de poids fort et $C_{min,j}$ la valeur de MIND portant sur les 2 bits de poids inférieurs,
- $N_{max,j}$ la valeur de MAXD portant sur ses "2 * (j-1)" bits de poids fort et $C_{max,j}$ la valeur de MAXD portant sur les 2 bits de poids inférieurs,
- $N_{rt,j}$ la valeur de RT_PRIO portant sur ses "2 * (j-1)" bits de poids fort et $C_{rt,j}$ la valeur de RT_PRIO portant sur les 2 bits de poids inférieurs.

On procède comme suit :

On ignore les codes à gauche du code défini par "$C_{min,j}$" si $N_{min,j}$ = ELEMj ,
On ignore les codes à droite du code défini par "$C_{max,j}$" si $N_{max,j}$ = ELEMj .

Phj ne prend en compte que les codes restants pour ce qui suit.

- Si V/CD = VBR , Phj élit le code prioritaire de la façon suivante : "$C_{rt,i}$" rotations à droite sont d'abord effectuées sur les priorités des codes.
  Le numéro de case élu est celui qui contient une date inférieure à la date courante Dc et qui a la plus grande priorité. Le numéro de cette case est alors concaténé à ELEMj sur ses poids faibles pour être passé ensuite à l'étage j+1. Si d'autres cases contiennent une date inférieure à la date courante Dc, le numéro de case de la plus prioritaire d'entre-elles est concaténé à ELEMj pour former RSPRI. Dans le cas contraire, RSPRI se voit concaténer "00" sur son ancienne valeur.
- Si V/CD = CBR , Phj élit le code prioritaire en choisissant simplement la plus petite date.
  Le numéro de sa case associée est alors concaténé à ELEMj sur ses poids faibles pour être passé ensuite à l'étage j+1. "$C_{rt,j}$" et RSPRI ne sont pas évalués.

Les trois exemples suivants étayent ce qui vient d'être décrit.

**a) détermination de RSPRI et ELEM pour RT_PRI = "00...00".**

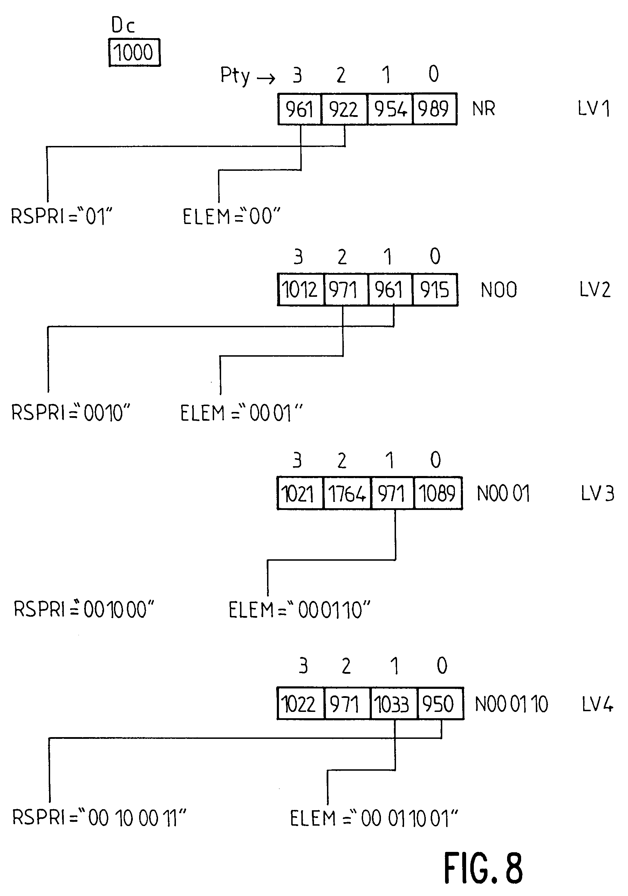

On se reporte pour l'explication à la figure 8. A cette figure, la référence K0 représente la valeur de la date courante "Dc", la référence K1 les valeurs des cases du noeud racine NR. Chaque case est numérotée de "00" à "11" en numération binaire de gauche à droite et est affectée d'un numéro de priorité "Pty" allant de 3 à 0 en numération décimale de gauche à droite. Un numéro de priorité élevé indiquant une priorité élevée. Seules sont considérées les cases contenant une date inférieure à la date courante Dc. Comme les cases du noeud NR ne contiennent que des dates inférieures à la date "Dc", on choisit la date 961 de priorité 3 dont la case est numérotée "00" : ceci consitue les deux premiers éléments binaires du code ELEM. Ensuite, on choisit la date de priorité inférieure soit 922 qui correspond à la case "01" avec une priorité de 2. Les deux premiers éléments binaires de RSPRI sont alors "01". On passe alors au noeud du niveau LV2. Le numéro du noeud est donné par la valeur ELEM donc on considère le noeud N00. Ici on se rend compte que la date la plus prioritaire ne convient pas puisque sa valeur 1012 est supérieure à la date courante. On se rabat sur la date 971 de priorité 2 qui est située à l'emplacement "01" le code ELEM devient "00 01". La valeur de RSPRI passe "00 10" car l'emplacement "01" correspond à la priorité inférieure.
On peut alors passer au niveau LV3 où l'on considère le noeud N0001 défini par le code ELEM établi plus haut. Ce noeud N0001 ne contient qu'une date 971 qui est inférieure à la date courante. Comme cette date est située à l'emplacement ""10" le code ELEM devient ELEM = "00 01 10". Dans ce genre de circonstance on ajoute par concaténation "00" à la valeur RSPRI déjà évaluée de sorte que RSPRI = "00 10 00".
On peut passer ensuite au niveau LV4 où l'on considère le noeud N000110. Ce noeud contient deux dates inférieures à la date courante. On choisit donc la date 971 qui correspond à la case "01" de priorité 2, soit la nouvelle valeur de ELEM = "00011001". Ensuite, on choisit la priorité inférieure, soit 950 qui correspond à la case "11". La nouvelle valeur de RSPRI est donc "00011011". A noter que, contrairement à ELEM qui s'enrichit de deux bits à chaque étage sans modifier les bits précédemment acquis, la valeur de RSPRI est changée en concaténant le noeud - en écrasant donc l'ancienne valeur - et la case de l'élément élu en deuxième priorité. On procède ainsi de suite jusqu'au niveau feuilles.

**b) détermination de RSPRI et ELEM pour RT_PRI = "01101...".**

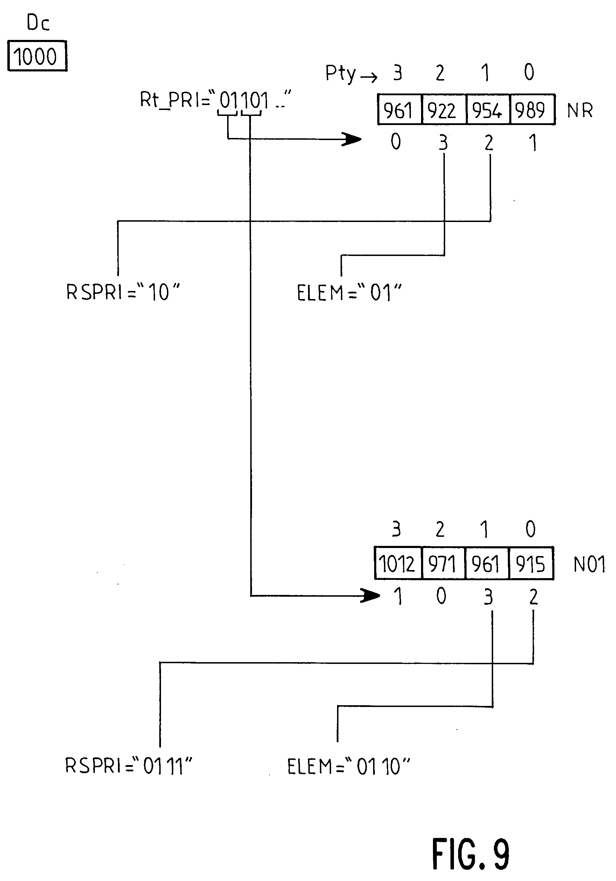

On se reporte maintenant à la figure 9. On considère le même noeud racine qu'à la figure précédente. Cette fois la priorité initiale est modifiée par les deux premiers éléments binaires du code RT_PRI. Comme ces éléments binaires sont "01", on décale vers la droite les codes de priorité de sorte que c'est la date 922 qui devient la plus prioritaire et la date 954 a la priorité qui suit, de sorte que ELEM = "01" et RSPRI = "10". Pour le niveau LV2 la case sélectionnée est "10" qui correspond à la priorité la plus élevée car les priorités ont été" changées par les troisième et quatrième éléments binaires qui suivent soit : "10", finalement, on obtient RSPRI = "0111" et ELEM = "0110".

**c) détermination de RSPRI et ELEM pour RT_PRI = "0110..." compte tenu de MIND et MAXD.**

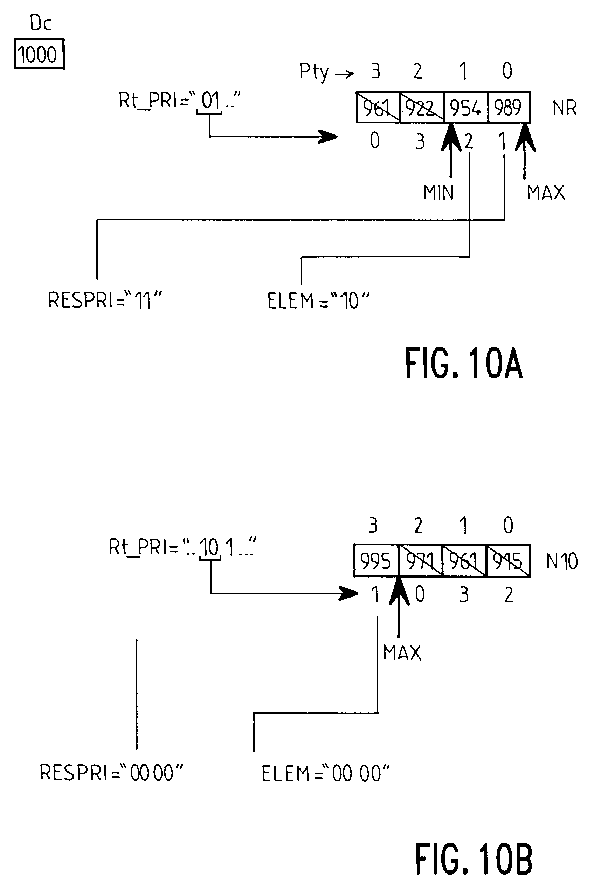

On se reporte en A à la figure 10. On suppose que les deux premiers éléments binaires de la valeur MIND sont "10", c'est-à-dire que cette valeur pointe sur la date 954, toutes les dates situées à gauche de cette valeur sont invalidées comme l'indique les rayures sur les dates 961 et 962. Les deux premiers éléments binaires de la valeur MAXD sont "11", de sorte qu'aucun des éléments dates n'est invalidé par MAXD. Les éléments binaires de RT_PRI qui concernent le noeud NR sont "01" de sorte que les valeurs de priorité sont décalées. Comme la date la plus prioritaire 922 est rayée on prend la date 954 de priorité 2 et les éléments de RESPRI représentent l'emplacement de la priorité "11".

On se reporte en B à la figure 10. On suppose MIND = "0010..." et MAXD = "1000..." et que l'on considère le noeud N10 de LV1. Seul MAXD est pris en considération car la valeur du noeud "10" est égale à celle contenue dans MAXD sur ses deux bits de poids forts. Les dates qui se trouvent à droite de la flèche MAX sont rayées soit : 971, 961 et 915. Seule subsiste la date 995 ce qui donne pour ELEM les deux élément binaires "00". Comme il n'y a aucune date de priorité moindre, RESPRI a donc les éléments binaires "00" concaténés à son ancienne valeur.

Les circuits ainsi décrits permettent un fonctionnement en pipe-line si on utilise des registres qui portent les références PA6,5 PB6,5 et PC6,5 à la figure 7. C'est-à-dire pendant que le processeur gère un code, le processeur suivant gère un code précédent. Le fait de mettre un processeur par étage de l'arbre permet d'augmenter le débit des notifications introduites dans l'arborescence. Si ce débit est faible, l'homme de l'art n'aura aucune difficulté à diminuer le nombre de portes consommées par le dispositif en assignant plusieurs étages à un même processeur. On constatera que le traitement racine-feuilles tiendra compte de mise à jour postérieure, sur un code, à son traitement feuilles-racine.

Les dates sont codées sur "N" bits de large dans l'arborescence. Cette quantité dépend des plus bas débits que l'on souhaite traiter. Deux booléens supplémentaires $+\infty$ / $-\infty$ permettent de déclarer, respectivement, une date jamais éligible (toujours supérieure à la date courante) et toujours éligible (toujours inférieure à la date courante).

A noter que le dispositif supporte un codage de date sur 0 bit, la date se résumant aux booléens $+\infty$ / $-\infty$ codés éventuellement sur 1 bit et marquant l'absence ($+\infty$) ou la présence ($-\infty$) de cellule(s) en attente pour un circuit virtuel : l'intérêt du dispositif n'est plus sa fonction d'espacement de cellules (laquelle pourra être réalisée en amont du dispositif) mais sa capacité à sélectionner une partition de circuits virtuels et d'y élire un élément prioritaire.

**L'ORGANE DE CALCUL 410.**

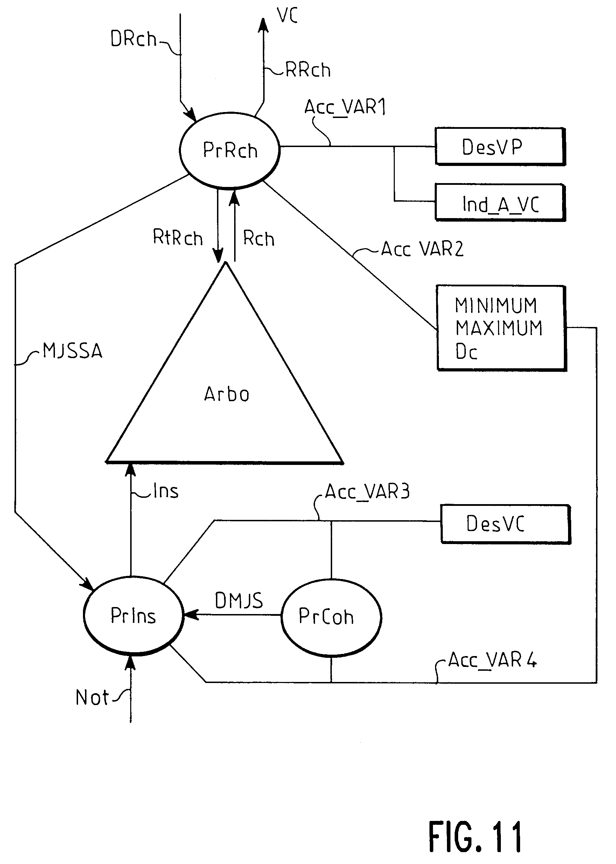

La figure 11 donne la constitution logique de cet organe. Il est établi autour de trois gestionnaires dont l'exécution est concurrente. Ces processus communiquent par "boîte aux lettres" (mailbox). Ils interagissent avec la fonction Arbo fournie par l'arbre 400, au moyen des primitives Rch et Ins, et le résultat RtRch qui viennent d'être décrits. L'homme de l'art n'aura aucune difficulté à traduire en HDL (Hardware Description Language) pour les "compiler" sur silicium.

Parmi ces différents gestionnaires, on distingue :

- PrRch : gestionnaire de recherche. Ce processus coopère d'une part, avec un descripteur de VP (DesVP) et des variables d'indirection Ind_A_VC (liaison Acc_VAR1) et, d'autre part, avec la date courante "Dc" fournie par le compteur de datation 405 et les valeurs MINIMUM et MAXIMUM définissant les sous-arbres (liaison Acc_VAR2). Ce processus déclenche la recherche Rch pour la fonction Arbo et en récupère le résultat RtRch. Ce processus reçoit des demandes de recherche par une liaison DRch et fournit le résultat final par une liaison RRch. Il communique aussi par une liaison MJSSA vers un processus PrIns.
- PrIns : gestionnaire d'insertion qui déclenche les insertions de dates dans la fonction arborescence Arbo au moyen de la liaison qui correspond à la fonction Ins. Ce processus communique avec une table de descripteurs de VC, appelée DesVC, au moyen de la liaison Acc_VAR3 et aussi des variables MINIMUM, MAXIMUM et Dc au moyen de la liaison Acc_VAR4. Il est déclenché à partir de notification provenant de la ligne 260 (cf fig.3), ce qui est indiqué par la liaison Not. Ce processus est encore déclenché par le processus PrRch, comme dit ci-dessus. Il est enfin déclenché par un processus PrCoh (liaison DMJS).

- PrCoh : gestionnaire de cohérence qui met à jour les différentes dates dans le circuit d'arborescence 400. On détaille ci-dessous ces différents gestionnaires.

## a) gestionnaire d'insertions.

Le gestionnaire d'insertions a pour fonction la mise à jour d'un descripteur de chaque VC et la mise à jour de l'arbre par insertions.
Il dispose du tableau de descripteurs VC (DesVC) indexé par le numéro de notification (équivalent au numéro VC). La forme d'un descripteur est donnée dans le tableau I suivant :

TABLEAU I

| Type_VC | sélection VBR/CBR |
|---|---|
| PT_PCR | entrée sous arbre PCR |
| PT_SCR | entrée sous arbre SCR |
| PT_CBR | entrée sous arbre CBR |
| Butée_CBR | gigue maximale admissible en mode CBR |
| Date_butée_CBR* | date théorique maximale d'émission sous arbre CBR |
| Th_PCR* | date théorique minimale d'émission sous arbre PCR |
| Th_SCR* | date théorique minimale d'émission sous arbre SRC |
| Période_PCR | Période sous-arbre PCR |
| Période_SCR | Période sous-arbre SCR |
| Compteur_cell | compteur de cellules pour ce VC |
| Temps_rafale | temps maximal de rafale PCR admissible |

\* Ces variables disposent de deux marqueurs + ∞ et - ∞.

L'ensemble de fonctions EFunc1 exécuté à l'arrivée d'une notification 'i' (Not) est le suivant :

## EFunc1

```
DEBUT

Compteur_cell [i] = Compteur_cell [i] + 1

si   Compteur_cell [i] =1

        si   Type_VC[i] = CBR

                alors

                    Date_butée_CBR[i] = DC+Butée_CBR[i]

                    "Ins" (PT_CBR[i], Date_Butée_CBR[i], VRAI, MINIMUM,

                    MAXIMUM)

                sinon

                    caIculer et mettre à jour Th_PCR[i] et Th_SCR[i] en

                    fonction du tabIeau II.

                    "Ins" (PT_PCR[i], Th_PCR[i], VRAI, MINIMUM, MAXIMUM)

                    "Ins" (PT_SCR[i], Th_SCR[i], VRAI, MINIMUM, MAXIMUM)

        finsi

    finsi

    FIN
```

L'ensemble de fonctions EFunc2 exécuté à l'arrivée d'une demande de mise à jour de la part du processus de recherches sur une VC de numéro 'i', transmise par la liaison MJSSA est le suivant :

## EFunc2

```
DEBUT

Compteur_cell [i] = Compteur_cell [i] -1

si   Compteur_cell [i] < > 0

        alors

            si Type_VC[i] = CBR

                alors

                    Date_butée_CBR[i] = DC+Butée_CBR[i]

                    "Ins" (PT_CBR[i], Date_Butée_CBR[i], VRAI, MINIMUM,

                    MAXIMUM)

                sinon

                    calculer et mettre à jour Th_PCR[i] et Th_SCR[i] en

                    fonction du tableau 1I.

                    "lns" ( PT_PCR[i], Th_PCR[i], VRAI, MINIMUM, MAXIMUM)
```

```
                    "Ins" ( PT_SCR[i], Th_SCR[i], VRAI, MINIMUM, MAXIMUM)
                finsi
        sinon
            si Type_VC[i] = CBR
                alors
                    "Ins" (PT_CBR[i], + ∞, VRAI, MINIMUM, MAXIMUM)
                sinon
                    "Ins" (PT_PCR[i], + ∞, VRAI, MINIMUM, MAXIMUM)
                    "Ins" (PT_SCR[i], + ∞, VRAI, MINIMUM, MAXIMUM)
            finsi
    finsi
    FIN
```

L'ensemble de fonctions EFunc3 exécuté à l'arrivée d'une demande de sélection d'un sous-arbre de la part du processus de recherches est le suivant :

## Efunc3

```
DEBUT
"Ins" (MINIMUM, xxx, FAUX, MINIMUM, MAXIMUM)
"Ins" (MAXIMUM, xxx, FAUX, MINIMUM, MAXIMUM)
FIN
```

L'ensemble de fonctions EFunc4 exécuté à l'arrivée d'une demande de mise à jour de la part du processus de cohérence (liaison DMJS) est le suivant :

## EFunc4

```
DEBUT
si   Type_VC[i] = CBR
        alors
            "Ins" (PT_CBR[i], - ∞, VRAI, MINIMUM, MAXIMUM)
        sinon
            "Ins" (PT_SCR[i], - ∞, VRAI, MINIMUM, MAXIMUM)
            "Ins" (PT_PCR[i], - ∞, VRAI, MINIMUM, MAXIMUM)
finsi
FIN
```

Le calcul des nouvelles valeurs de Th_SCR et Th_PCR pour un VC donné est montré dans le tableau II suivant :

TABLEAU II

| Th_SCR + Période_SCR < Dc | Th_PCR + Période_PCR < Dc | Th_SCR + Période_SCR < Dc+Temps_rafale | Nouvelles valeurs de Th_SCR et Th_PCR |
|---|---|---|---|
| non | non | non (rafale PCR interdite) | Th_SCR = Th_SCR + Période_SCR Th_PCR = Dc + Période_SCR |
| non | non | oui (rafale PCR autorisée) | Th_SCR = Th_SCR + Période_SCR Th_PCR = Th_PCR + Période_PCR |
| non | oui (rupture de flux) | non (rafale PCR interdite) | Th_SCR = Th_SCR + Période_SCR Th_PCR = Dc + Période_SCR |
| non | oui (rupture de flux) | oui (rafale PCR autorisée) | Th_SCR = Th_SCR + Période_SCR Th_PCR = Dc |
| oui (rupture de flux) | non | - | Th_SCR = Dc (cas impossible) Th_PCR = Dc (Période_SCR > Période_PCR) |
| oui (rupture de flux) | oui (rupture de flux) | - | Th_SCR = Dc Th_PCR = Dc |
| Dc : Date courante | | | |

**b) gestionnaire de recherches.**

Le dispositif reçoit en phase de recherche un argument VP qui indique dans quel sous-ensemble de VC (Les VC contenus dans ce VP) l'élection du VC va avoir lieu.
Chaque VP possède un descripteur (DesVP) avec les arguments suivants :

TABLEAU III

| PTmin_PCR | pointeur minimum du VP sous arbre PCR |
|---|---|
| PTmax_PCR | pointeur maximum du VP sous arbre PCR |
| PTmin_SCR | pointeur minimum du VP sous arbre SRC |
| PTmax_SCR | pointeur maximum du VP sous arbre SCR |
| PTmin_CBR | pointeur minimum du VP sous arbre CBR |
| PTmax_CBR | pointeur maximum du VP sous arbre CBR |
| ROT_SCR* | indice de rotation de priorité sur sous arbre SCR |
| ROT_PCR* | indice de rotation de priorité sur sous arbre PCR |
| OPT_ROT_SCR | Booléen d'activation/inactivation de priorité tournante SCR |
| OPT_ROT_PCR | Booléen d'activation/inactivation de priorité tournante PCR |
| Un tableau annexe Ins_A_VC permet de retrouver un VC à partir d'un de ses éléments-feuilles dans l'arbre. | |

\* ROT_SCR et ROT_PCR sont initialisés à O au démarrage.

L'ensemble de fonctions EFunc5 exécuté à l'arrivée d'une demande de recherche sur un VP donné (liaison "DRch") noté 'i' est le suivant :

## EFunc5

```
DEBUT
y = - 1 (valeur impossible)
MINIMUM = PTmin_CBR[i]
MAXIMUM = PTmax_CBR[i]
émettre une demande de sélection de sous-arbre vers le processus
insertions
attendre son exécution, c'est-à-dire que date racine soit mise à
jour.
si   Date_racine < > + ∞
```

```
        alors
            "Rech" (CBR,MlNlMUM, MAXIMUM,xxx)
            le retour de recherche donne 'y' le numéro de feuille
            élu dans I'arbre.
        sinon
            MlNlMUM = PTmin_SCR[i]
            MAXlMUM = PTmax_SCR[i]
            émettre une demande de sélection de sous-arbre vers le
            processus insertions
            attendre son exécution, c'est-à-dire que date racine
            soit mise à jour.
            si Date_racine (< ou =) Date courante
            alors
                "Rech" (VBR,MlNlMUM, MAXIMUM,ROT_SCR[i])
                le retour de recherche donne 'y' le numéro de feuille
                élu dans l'arbre.
                le retour donne "resprio" qui est l'indice de priorité
                trouvé.
            si OPT_ROT_SCR[i] = VRAl
                alors ROT_SCR[i] = resprio
            finsi
            sinon
                MlNIMUM = PTmin_PCR[i]
                MAXIMUM = PTmax_PCR[i]
                émettre une demande de sélection ss arbre vers le
                processus insertions
                attendre son exécution, c'est à dire que date racine
                soit mise à jour.
                si Date_racine (< ou =) Date courante
                alors
                    "Rech" (VBR,MINIMUM, MAXIMUM,ROT_PCR[i])
                    le retour de recherche donne 'y' le numéro de
                    feuille élu dans l'arbre.
                    le retour donne resprio l'indice de priorité
                    trouvé.
                    si OPT_ROT_PCR[i] = VRAI
```

```
                        alors

                            ROT_SCR [i]= resprio

                    finsi

                finsi

            finsi

    finsi

    si   y < > -1

            alors

                vc_trouvé = Ind_A_VC

                    émettre une demande de mise à jour sur vc_trouvé vers

                    le processus d'insertions.

                    vc_trouvé est le numéro de VC retourné par le

                    dispositif sur "RRch"

            sinon

                    il n'y a pas de VC retourné par le dispositif car

                    aucun n'est éligible.

    finsi

    FIN
```

**c) gestionnaire de cohérence.**

Ce processus balaie les différents VC et 'nettoie' les dates devenant trop négatives par rapport à la date courante. Ce processus est lent et peut mettre plusieurs millisecondes pour scruter la totalité des VC.
L'ensemble de fonctions EFunc6 associé est le suivant, avec N qui est le nombre de VC contrôlés par le dispositif :

## EFunc6

```
DEBUT

pour i  allant  de  0  à  N-1

    répéter

        si Type_VC = CBR

            alors

                si Date_butée_CBR[i] - Date courante < SEUIL

                alors

                    Date_butée_CBR[i] = - ∞
```

```
            demander une insertion sur 'i' au gestionnaire
            d'insertions
        finsi
    sinon
        si Th_PCR[i] - Date courante < SEUIL ou Th_SCR[i] - Date
        courante < SEUIL
            alors
                Th_PCR[i] = - ∞
                Th_SCR[i] = - ∞
                demander une insertion sur 'i' au gestionnaire
                d'insertions
            finsi
        finsi
    fin-de-répéter
FIN
```

Dans une variante simplifiée, le dispositif peut très bien fonctionner sans notification sur tout ou une partie de ses circuits de service. Dans ce mode dit "auto-notifié", l'arbre est alimenté une première fois pour "amorcer" ses circuits de service sans notification. L'organe de calcul ne prend pas en considération le compteur de cellules en attente associé à chaque circuit de service "auto-notifié", de sorte que ces derniers sont périodiquement élus dans l'arbre, même en l'absence de cellules en attente. L'accès direct de la table contenant la période de chaque circuit de service rend la modification des débits immédiate et rend le système attrayant pour l'application de méthodes de régulation des flux nécessitant une variation rapide des débits sans contrainte de gigue importante.

## Revendications

1.  Système de communication formé d'au moins un réseau du genre A.T.M., notamment, qui transmet d'un de ses points d'accès à un autre des cellules d'informations comportant un premier identificateur de destination (VP) définissant un ensemble de destinations et un deuxième identificateur de destination (VC) définissant un sous-ensemble dudit ensemble et d'au moins un dispositif de multiplexage (160) constitué par :

    -   une pluralité de bornes d'accès pour des utilisateurs ayant des cellules à transmettre, avec un certain débit, vers une certaine destination définie par lesdits identificateurs de destination,
    -   au moins une borne de raccord (170 ) pour au moins un point d'accès dudit réseau,
    -   une pluralité de circuits de service (200 ), reliés aux bornes d'accès, munis d'organes de files d'attente (201 ) pour emmagasiner chacun les cellules d'utilisateur ayant les mêmes identificateurs de destination et pour rendre disponibles, sur des sorties de cellules, les cellules emmagasinées,
    -   un circuit d'affectation (300) pour déterminer à une date courante la fourniture, à ladite borne de raccord par l'intermédiaire d'un circuit de sortie, d'une cellule, dite cellule élue, choisie parmi les cellules disponibles, circuit comprenant :

        •   un circuit pour fournir un premier identificateur de destination (420),

    système caractérisé en ce que le circuit d'affectation comporte, en outre :

        •   un circuit de détermination de dates théoriques (EFunc1) pour déterminer une date théorique pour l'émission des cellules disponibles de chaque circuit de service en fonction notamment du certain débit,
        •   un circuit d'arborescence présentant :

. des "feuilles" pour recevoir les dates théoriques pour chaque circuit de service,

. une racine pour contenir des dates dites dates racine à partir desquelles est établie une date dite date prioritaire, parmi les dates théoriques,

. des noeuds établis en couches qui relient lesdites feuilles à ladite racine,

• un circuit de sous-arborescence pour sélectionner des feuilles parmi les feuilles du circuit d'arborescence en fonction du premier identificateur de destination et pour créer une partition à l'intérieur de celui-ci,

• un circuit de détermination de date racine pour déterminer dans ladite partition, au moins une date racine.

2. Système de communication selon la revendication 1 caractérisé en ce que le circuit de sous-arborescence comporte en outre des moyens pour établir une priorité tournante à chaque couche sous l'action du circuit d'extraction.

3. Système de communication selon la revendication 1 ou 2, caractérisé en ce que le circuit d'arborescence est constitué par des processeurs dont chacun est affecté à une desdites couches.

4. Circuit de multiplexage qui transmet d'un de ses points d'accès à un autre des cellules d'informations comportant un premier identificateur de destination (VP) définissant un ensemble de destinations et un deuxième identificateur de destination (VC) définissant un sous-ensemble dudit ensemble et constitué par :

- une pluralité de bornes d'accès pour des utilisateurs ayant des cellules à transmettre, avec un certain débit, vers une certaine destination définie par lesdits identificateurs de destination,
- au moins une borne de raccord pour au moins un point d'accès dudit réseau,
- une pluralité de circuits de service, reliés aux bornes d'accès, munis d'organes de files d'attente pour emmagasiner chacun les cellules d'utilisateur ayant les mêmes identificateurs de destination et pour rendre disponibles, sur des sorties de cellules, les cellules emmagasinées,
- un circuit d'affectation pour déterminer à une date courante la fourniture, à ladite borne de raccord par l'intermédiaire d'un circuit de sortie, d'une cellule, dite cellule élue, choisie parmi les cellules disponibles, circuit comprenant :

• un circuit pour fournir un premier identificateur de destination,

circuit caractérisé en ce qu'il comporte, en outre :

• un circuit de détermination de dates théoriques pour déterminer une date théorique pour l'émission des cellules disponibles de chaque circuit de service en fonction notamment du certain débit,

• un circuit d'arborescence présentant :

. des "feuilles" pour recevoir les dates théoriques pour chaque circuit de service,

. une racine pour contenir des dates dites dates racine à partir desquelles est établie une date dite date prioritaire, parmi les dates théoriques,

. des noeuds établis en couches qui relient lesdites feuilles à ladite racine,

• un circuit de sous-arborescence pour sélectionner des feuilles parmi les feuilles du circuit d'arborescence en fonction du premier identificateur de destination et pour créer une partition à l'intérieur de celui-ci,

• un circuit de détermination de date racine pour déterminer dans ladite partition, au moins une date racine.

5. Circuit de multiplexage selon la revendication 4 caractérisé en ce que le circuit de sous-arborescence comporte en outre des moyens pour établir une priorité tournante à chaque couche sous l'action du circuit d'extraction.

FIG. 1

FIG. 2

FIG. 3

FIG. 4

FIG.5

FIG. 6

FIG. 7

Dc
[1000]

Pty → 3 2 1 0
| 961 | 922 | 954 | 989 | NR       LV 1

RSPRI ="01"        ELEM ="00"

3 2 1 0
| 1012 | 971 | 961 | 915 | N00       LV 2

RSPRI ="0010"        ELEM ="0001"

3 2 1 0
| 1021 | 1764 | 971 | 1089 | N00 01       LV 3

RSPRI ="001000"        ELEM ="000110"

3 2 1 0
| 1022 | 971 | 1033 | 950 | N00 01 10       LV 4

RSPRI ="00 10 00 11"        ELEM ="00 01 10 01"

# FIG. 8

Dc
[1000]

Pty→  3   2   1   0

Rt_PRI="01101 .."

| 961 | 922 | 954 | 989 | NR
|---|---|---|---|

  0   3   2   1

RSPRI="10"                ELEM="01"

  3   2   1   0

| 1012 | 971 | 961 | 915 | N01
|---|---|---|---|

  1   0   3   2

RSPRI="0111"            ELEM="0110"

# FIG.9

FIG. 10A

FIG. 10B

FIG. 11

EP 0 735 793 A1

| ))) | Office européen des brevets | RAPPORT DE RECHERCHE EUROPEENNE | Numero de la demande EP 96 20 0792 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP-A-0 618 748 (TRT) <br> * abrégé; revendications 1-4 * <br> --- | 1,5 | H04Q11/04 <br> H04J3/24 |
| A | 1994 IEEE GLOBECOM, <br> vol. 1, 28 Novembre 1994, US, <br> pages 600-605, XP000488616 <br> G RAMAMURTHY ET AL: <br> * section 4 * <br> ----- | 1,5 | |
| | | | **DOMAINES TECHNIQUES RECHERCHES (Int.Cl.6)** <br> H04Q <br> H04J <br> H04L |

Le présent rapport a été établi pour toutes les revendications

| Lieu de la recherche | Date d'achèvement de la recherche | Examinateur |
|---|---|---|
| LA HAYE | 18 Juin 1996 | Lindner, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)